# EUROPEAN PATENT SPECIFICATION

(11) **EP 3 058 545 B1**
(45) Date of publication and mention of the grant of the patent: **09.08.2017**
(21) Application number: 14854297.0
(22) Date of filing: 29.01.2014
(51) Int. Cl.: G06Q 99/00, G06N 7/00, H04L 29/06

(54) **SYSTEM FOR DETECTING CLASSES OF AUTOMATED BROWSER AGENTS**
SYSTEM ZUR ERKENNUNG VON KLASSEN AUTOMATISIERTE BROWSERAGENTEN
SYSTÈME POUR DÉTECTER DES CLASSES D'AGENTS DE NAVIGATEUR AUTOMATISÉS

(30) Priority: 18.10.2013 US 201314057730
(43) Date of publication of application: 24.08.2016
(73) Proprietor: White Ops, Inc., New York, NY 10010 (US)
(72) Inventor: TIFFANY, Michael J.J., New York, NY 10038 (US); KAMINSKY, Daniel, San Francisco, CA 94110 (US)
(74) Representative: Zahn, Matthias
(86) International application number: PCT/US2014/013550
(87) International publication number: WO 2015/057255

(56) References cited:
- WO-A1-2012/073233
- WO-A2-2010/143152
- US-A1- 2006 136 294
- US-A1- 2007 239 604
- US-A1- 2007 282 693
- US-A1- 2008 301 808
- US-A1- 2009 094 311
- US-A1- 2009 241 174
- US-A1- 2011 131 652
- US-A1- 2011 320 816
- US-A1- 2012 246 293
- US-A1- 2013 198 203
- Anonymous: "Support vector machine - Wikipedia, the free encyclopedia", , 3 September 2012 (2012-09-03), XP055089541, Retrieved from the Internet: URL:http://en.wikipedia.org/w/index.php?ti tle=Support_vector_machine&oldid=510528719 [retrieved on 2013-11-21]

## Description

### FIELD OF THE INVENTION

This invention relates to the general field of Internet communications software, and it has certain specific applications to the analytical evaluation of Internet communications.

### BACKGROUND OF THE INVENTION

For a host of reasons, numerous individuals and organizations are actively engaged on a daily basis in sending malicious, automated traffic to web pages and other internet destinations, and making that traffic appear as if it that traffic is human and not automated. For example, the vast majority of revenue presently derived from Internet traffic results from paid advertising. Companies and individuals pay for the placement of advertisements on the Internet where they may be seen and interacted with by people who may be interested in learning about and purchasing their products. Given that these advertising interactions take place electronically and at a distance, it is possible for those interested in capturing some portion of the revenue spent on Internet advertising to employ automated software agents to defraud those paying for the advertising. This is done by making it appear as if advertisements have been viewed by humans who may be interested in a given product, where, in reality, a given advertisement has only been viewed or interacted with by malicious software, which exists only for the purpose of committing such acts of fraud.

Currently, there exist passive systems and methods which detect automation, or host, differentials such as, for example, whether all content is loaded, or whether request rates match legitimate browsers. Detection of these differentials is helpful from a networking hardware perspective - one can implement the system on a network, interfere with nothing, and recover data. This data, however, is not necessarily high quality because, for example, legitimate human users might have unusual access patterns, caching layers prevents requests like automated bots might, and most importantly, bots are increasingly becoming full browsers thus matching many of these passive metrics quite frequently.

### SUMMARY OF THE INVENTION

During the initial learning period, all browsing activity on a page (e.g. mouse clicks) can be split into groups based on their origin. For example, page requests coming from computers on protected government network are most likely submitted by humans, and will be categorized as such. Requests coming from IP addresses belonging to known bot networks have a low probability of being human interaction and will be categorized in a separate groups.

Data collection by the analysis server is made possible by code snippets inserted (or injected) into the page code by the web server before the page is sent to the user's browser. This code performs data collection about the user's interaction with the web page and transmits the collected data to the analysis server via multiple communication channels.

At the bot detection stage, data transmitted to the analysis server is checked if it matches a pattern characteristic for human interaction or automated bot submission pattern. The typical elements of a bot pattern include, but are not limited to, (1) interaction with invisible elements of the page, (2) missing properties of an interaction (for example, a mouse click), (3) wrong interaction timing (for example, a mismatch between mouse down and mouse up timestamp), (4) interface behavior being atypical for human (for example, mouse moving along an absolutely straight line), (5) wrong page element property due to the fact that a bot failed to guess correctly what data will be entered by a browser during the page load, (6) a set of available communication channels does not match the set characteristic for the typical human-operated computer. The results of the detection are provided to the customer of the analysis system in real time or, alternatively, as a report for a given time period.

### BRIEF DESCRIPTION OF THE DRAWINGS

Figure 1 illustrates an example of the deployment of the present invention in a typical webpage scenario.
Figure 2 illustrates an example of the process employed by the present invention to analyze internet traffic and determine whether a given user is a human or an automated agent.
Figure 3 illustrates the general data collection process of the present invention.

### DETAILED DESCRIPTION OF THE PREFERRED EMBODIMENT

### Definitions

HTML (HyperText Markup Language). The primary programming language used for creating, transmitting and displacing web pages and other information that can be displayed in an internet browser.

HTTP (Hypertext Transfer Protocol). The standard World Wide Web client-server protocol used for the exchange of information (such as HTML documents, and client requests for such documents) between a Web browser and a Web server. HTTP includes several different types of messages which can be sent from the client to the server to request different types of server actions. For example, a "GET" message, which has the format GET <URL>, causes the server to return the content object located at the specified URL.

Means for detecting. This term includes, but is not limited to, inserting a code snippet into a page HTML code before the page is sent to a browser.

The present invention discloses an active probing model for the collection of qualitative metrics evaluating human-driven browsing activity against automated agent-driven (i.e. bot-driven) activity over a computer network. Through this active probing model, a much deeper reservoir of differentials between the two types of activity can be implemented (compared to the differentials used in the current state of the art). In contrast to passive methods of collecting content which already exists on a network and content sent to existing systems (i.e. current methods for bot detection), the method disclosed herein actively loads additional code and sends additional content on the wire to different and new locations ("active probing"). JavaScript (JS) and Flash, for example, can be actively probed by the claimed system and method in order to detect bot activity and assemble a report based on qualitative performance metrics.

The claimed system and method assumes that legitimate human users, by in large, have JavaScript and other active scripting technologies, including but not limited to Flash, enabled and are using full web browsers. As such, a non-browser bot will simply fail to execute any queries that are at all dependent on JavaScript. The trap set for potential attackers is that, in evading this exceedingly reliable detection mechanism, they must now actually emulate all parts of the browser. And because a real JavaScript environment-as well as other scripting technologies-has an infinite amount of properties that may be probed, the attacker must emulate every property potentially probed. Thus, previously unnoticed information and resulting discrepancies become exposed. For example, when a mouse event is falsified, one timestamp associated with that event may become absent; an auxillary field may be set to a unique and incorrect value; or a mouse event rate is too stable or too unstable. Some examples of properties that can be probed include but are not limited to: (1) the precise relationship of mouse events seen on a page (e.g., a click associated with a mouse-up or mouse-down movement, agreement between the two timestamps associated with each mouse event, as discussed above, etc.); (2) the rate that Flash is updated (e.g., per second) and the reliability of its calls; (3) operation of Flash stages in all locations of operation (e.g., operating in sync); and (4) the speed of completing a graphical update (e.g. to a <CANVAS > element), which might indicate the type of hardware used or the active updating of a real user screen.

The present invention allows the differentiation of malicious automated agents from humans by gathering and processing elements of a given user's interaction with a web page that occurs after a web page has been loaded by the user, and comparing those elements to reference results drawn from a control group. This is achieved in part by placing certain elements within the code of a web page prior to it being loaded by a given user, so that those elements may be evaluated after that user has loaded that web paws.

The elements monitored and evacuated fall into two main classes of data: (1) content that exists (or is absent, i.e. does not exist) at page load, and (2) content that is generated over time (or timing) as the page persists in potentially usable form. Content that exists at page load encompasses bits, or parts of code, which are accessible or visible even though they should not be. This content consists of JavaScript ("DOM") elements which exist (or do not exist) due to the manner in which the browser is hosted. For example, if loaded by a human user, some bits would be inaccessible for security or other reasons; however, if loaded by an automated agent or bot, the same bits would be accessible). For another example, automated agents also constantly and actively inject bot-specific configurations in manners that are different from the behavior of the browser or the site being monitored. In general, aspects of a shell (e.g. Internet Explorer, Firefox, Safari, Chrome) are exposed to the JavaScript environment in an engine (e.g. Trident, Gecko, Webkit), and bots, being shells themselves, either expose too much information or too little information, and the discrepancies are captured by the active probing model of the present invention. These captured characteristics include, but are not limited to, HTML5 standards compliance, patterns in error handling (including information about what language the errors are translated into), and browser elements injected by the browser shell rather than the native object (different objects are injected or not injected based on the host, which could be, e.g., Internet Explorer or an automated agent (i.e. bot) framework).

The second class of data, content that is generated over time (or timing), generally refers to elements that vary due to interaction with a human user. These might be events that take incorrect amounts of time, relative to one another, because there is no actual human for whom the events are being performed. Timing attacks work against more than just cryptographic systems. It is often faster, but sometimes much slower, to express the result of a browser operation (of which there are hundreds of thousands) when there is no screen to update and no user to inform. For example, error messages can be suppressed, or the graphics hardware novice that no pixels require update. By measuring absolute and relative timing differentials, bots expose themselves to the claimed system and method. Tests are generated on the infinite number of such differentials, hosted quite infrequently (since the purpose of bots is to operate at scale, this does not have to occur often), and thus an attacking developer faces the obstacle of forging credentials he does not necessarily know in advance.

The present invention also collects data regarding any given user's interaction with a webpage after it has been loaded. This data includes, but is not limited to, mouse activity (where the mouse is located, number of updates per second, geometry of mouse movement, ancillary data to mouse event data-i.e. the metadata associated with a mouse click, scroll up, scroll drown, or scroll over, the correlation between mouse events, etc.), missing data when an event is incorrectly synthesized, keyboard activity, accelerometer data, scroll events, average read and visit time, page update rate (animation rate has a strong correlation with visibility of a page), and supported network protocols and web standards (bots can break communication pathways).

The user interaction data elements are compared with reference results drawn from a set of three different control groups: (1) those interactions believed to be made by automated agents or bots, (2) those interactions believed to be made by a human, and (3) those interactions which are unclear as to whether performed by a human or a bot The best control groups for sets of elements of true human interaction arise from web browsers driven from authenticated locations in places with no reason for advertising fraud. The best control groups for sets of clement of hot behavior arise from "bot zoos" or other automated agent networks.

Before the process of differentiation begins, an individualized code snippet must be inserted into the HTML code of a given web page. When this code snippet is present in the code of a given web page and that page is accessed, performance metrics are sent to remote analysis servers via asynchronous HTTP posts. These metrics evaluate the behavior and performance of the entity that viewed or is view ing the given web page, and how that page was loaded. The code snippet is injected as JavaScript alongside an advertisement or other script load event. As the Internet is comprised of many such loads (or injections), this invention creates merely one more. For example, a performance metric based on a mouse event can be collected in the following manner. (1) Handlers and listeners are registered for a mouse event; (2) The handler receives the various timestamps and values associated with the mouse event; (3) The system then emits the raw timestamps and values, or a summary thereof, over the network. If no listener is registered, it would be impossible to recover this data from the ambient traffic.

Performance metrics for various visitors to a given web page containing the code snippet, as well as those for all web pages containing similar code snippets are compiled and aggregated by the remote analysis servers into reportable metrics, which in turn are made available to the operator of a given web page in a number of reporting mediums, including, but not limited to, password protected interactive HTML dashboards, exportable spreadsheet documents, and subscription based email and PDF reports, and may be used in real time to control access to a given web page.

The performance metrics that are reportable include, but are not limited to, the origin and destination of a visitor, the livelihood that the visitor was an automated agent or human, and a variety of variables that identify information, such as advertising data points, including, but not limited to, advertising campaign specific code, the advertising medium, the source ID and the advertising provider.

These metrics are evaluated in such a way by the remote analysis servers that the information presented to the operator of a given web page that has included a code snippet is presented with a qualitative evaluation of whether or not a given visit to that web page was or was not made by an automated agent. This process of evaluation entails the following; the code snippet sends "emit events" from various "plugins". These emissions (i.e. "emit events") are sent via a variety of network channels, not all of which are always available. The present channels used are <img> tags, XMLHTTPRequests with CORS (Cross Origin Resource Sharing), and IFrame Form Post events. Initially, IFrame Form Posts are used, since they are the most compatible. Seconfly, if CORS is compatible, the system can be upgraded to CORS. Other channels include WebSockets and Same Domain XMLHTTPRequest (which requires use of a local iframe that is configured to speak cross domain, through a toolkit like EasyXDM).

Furthermore, the computational process required to determine the above performance metrics and ultimately evaluate whether a visitor is automated or human can be implemented either via batch processing or via stream processing. Batch processing can be more efficient and can collate metrics across several events. Stream processing can scale better than batch processing but it cannot, for example, use future data to inform past impressions of normality (because, at the time of decision, the future event has not yet occurred). With stream processing, time evaluation of a given user can be achieved. Thus, although normality metrics are determined by the past only, stream processing allows for the use of transaction identifiers embedded in a particular measurement event to evaluate, within thirty seconds of the last time of a given user's interaction, whether or not that user was a hot or a human.

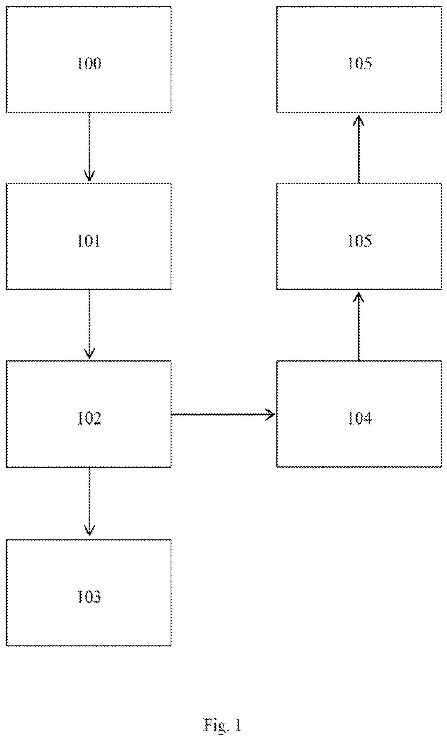

Figure 1 gives one example, of how the present invention may be deployed in a typical webpage scenario. First, a code snippet containing a unique identified is inserted into the webpage **100.** A user (human or automated) then requests the web page containing the code snippet **101.** The web page containing the code snippet is loaded by the user **102.** And as the user continues browsing normally **103,** data regarding the user's interaction with the web page is sent to the analysis server **104,** where the analysis server further analyzes the user data qualitatively **105.**

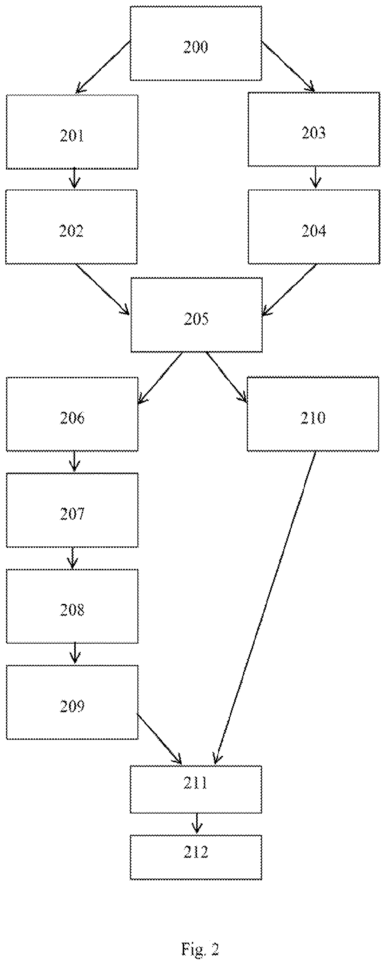

Figure 2 shows an example application of the repeatable process employed by the present invention to analyse internet traffic. The illustrated process is comprised of the following steps: Declare or collect customer (i.e. client) identifier, peer (i.e. who the customer would like to test against, e.g., publisher, advertisement location, secondary exchange, etc.) identifier, and transaction (i.e. the particular advertisement view) identifier 200; Load Loader GS **201** from analysis server; Script load of Signal Flare GIF **202** from analysis server load Signal Flare GIF **203** from analysis server; load human monitor (pagespeed.js) **204** from analysis server; Report load succeeded, under state "init" with all available metrics to analysis server **205;** If a human act is detected **206,** immediately issue a second report (state "first") **207**, wait six (6) seconds **208,** and issue a final report (state "statecheck") **209;** If no human act is detected **210,** steps **207**, **208**, and **209** do not occur; Perform a qualitative analysis of available metrics and reports, if any **211**; and Report a qualitative score for the Customer ID (session) **212.**

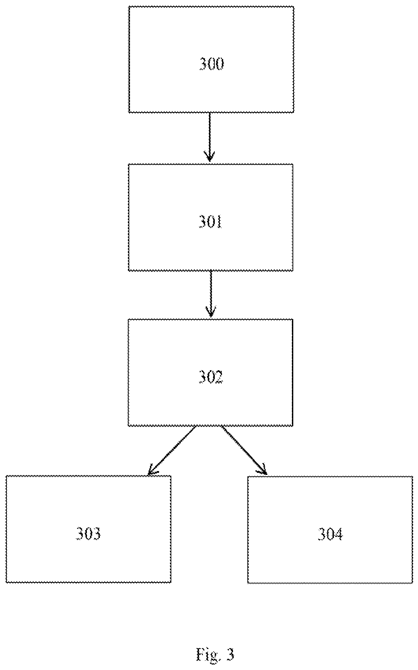

The process described above and illustrated by Figure 2 is one example of the more general process employed and claimed by the present invention. Specifically, this broader process, shown in Figure 3, occurs as follows: First, customer, peer, and transaction identifiers are collected **300;** Next, these identifiers are embedded in an active probe, where the active probe (1) retrieves extra state from the client execution environment and (2) streams data back over multiple channels **301**; Third, these actively probed characteristics are measured against known botprints (i.e. bot characteristics) **302.** The two main classes of characteristics probed and analysed are (1) what channels or information is available and/or absent (note: the presence, or absence, of a channel is, by itself a botprint source), and (2) the time it takes for properties/characteristics to be probed. The performed analysis measures the degree/amount of automation as well as the degree/amount of true human interaction. Finally, reports are issued (1) to the customer/client, reporting on the automation/bot percentage **303,** according to the dimensions given in the peer identifier, and (2) to the server for further analysis and extra characteristics for more botprint generation **304.**

There are many applications for the presently claimed invention. In one application, the present technology integrates with financial anti-fraud (in a "send money" or a "shopping cart checkout" context). Another application of the present invention is for a pre-CAPTCHA signup auditor. It should be noted that the claimed system does not directly block a signup; it instead flags accounts that CAPTCHA systems are not noticing or catching. The claimed invention operates as an independent metric. It also operates as an excellent system for finding malware on internal enterprise networks, as most intranets use internal sites that attackers remotely browse. The system can detect that attackers are not actually the users they claim to be, even if and especially if they are tunneled through a machine on the corporate network.

The description of a preferred embodiment of the invention has been presented for purposes of illustration and description. It is not intended to be exhaustive or to limit the invention to the precise forms disclosed. Obviously, many modifications and variations will be apparent to practitioners skilled in this art. It is intended that the scope of the invention be defined by the following claims and their equivalents.

## Claims

1. A method for detecting automated browser agents, comprising:
inserting (100, 200) a means for detecting information into a page code before a page is sent to a user's browser,
sending (101, 102) said page to a user's browser, wherein said means sends emissions from one or more plugins via one or more channels, said emissions capturing user interaction information without requiring a browser interaction and causing immediate and continued data collection of said user interaction information, and
transmitting (104) via asynchronous HTTP posts said user interaction information to an analysis server, wherein said analysis server compares said user interaction information with reference results from a set of different control groups: pattern characteristics for humans, thus forming a report on automated browser agent activity based on a qualitative evaluation of performance metrics collected, and
making a conclusion (105) on a probability of the user being an automated browser agent, said probability being based on which of said references results has the highest match to said data; **the method characterized in**
**that** the set of different control groups also comprises pattern characteristics for automated browser agents, and pattern characteristics which are unclear as to whether performed by a human or an automated browser agent, and
**that** the user interaction information comprises elements that are monitored and evaluated, falling in two classes:
• content that exists while sending the page to the user's browser at page load, and
• content that is generated over time that varies due to interaction with a human user;
wherein user interaction information in the content that exist comprises capturing discrepancies by active probing, with capturing comprising:
HTML5 standards compliance, and patterns in error handling, and
wherein user interaction information relating to content that is generated over time relates to situations and information comprising:
suppressing error messages, graphic hardware noticing that no pixels require update, keyboard activity, and accelerometer data.

2. The method of claim 1, wherein said means for detecting comprise a code snippet and said user interaction information comprises HTML5 standards compliance.

3. The method of claim 2, further comprising: registering a handler and a listener for a given browser event, wherein said handler receives user interaction information associated with said browser event and said listener enables recovery of otherwise unidentifiable data.

4. The method of claim 2, wherein said data collection, comparing, and report is implemented via batch processing, or wherein said data collection, comparing, and report is implemented via stream processing.

5. The method of claim 2, further comprising integration with a pre-CAPTCHA signup auditor.

6. The method of claim 2, wherein said user interaction information further comprises communication channels that do not match the set characteristic for the typical human-operated computer.

7. The method of claim 2, wherein said user interaction information further comprises a Flash update rate.

8. The method of claim 2, wherein said user interaction information further comprises a syncing of Flash stages.

9. A computer system for automated browser agent detection, comprising: a first stage of identification, comprising grouping browsing activity based on origin, a second stage of data collection, comprising sending a page containing a pre-inserted code snippet for recording of particular user interaction information, at page load and after page load, and transmitting said user interaction information to an analysis server, a third stage of evaluation within said analysis server, comprising comparing said user interaction information against control groups comprising pattern characteristics for humans, pattern characteristics for automated browser agents, and pattern characteristics which are unclear as to whether performed by a human or an automated browser agent, and a fourth stage of reporting, comprising compiling a predictive report on automated browser agent activity based on a qualitative evaluation of performance metrics collected, said predictive report disclosing the highest matching database of said three databases,
wherein said user interaction information comprises: an interaction with invisible elements of a page, missing properties of an interaction, atypical interface behavior, a wrong page element property, mismatching communication channels, a Flash update rate, syncing of Flash stages, a graphical update rate, error handling information, HTML5 standards compliance, automated browser agent specific injected configurations, keyboard activity, accelerometer data, scroll events, and average read and visit time.

## Patentansprüche

1. Verfahren zum Erfassen automatisierter Browseragenten, umfassend:
Einfügen (100, 200) eines Mittels zum Erfassen von Informationen in einen Seitencode, bevor eine Seite an den Browser eines Benutzers gesendet wird,
Senden (101, 102) der Seite an den Browser eines Benutzers, wobei das Mittel Abgaben von einem oder mehreren Plug-Ins über einen oder mehrere Kanäle sendet, wobei die Abgaben Benutzerinteraktionsinformationen aufnehmen, ohne dass eine Interaktion mit dem Browser erforderlich ist und eine sofortige und fortlaufende Datensammlung der Benutzerinteraktionsinformationen bewirken, und
Übertragen (104) über asynchrone HTTP-Mitteilungen der Benutzerinteraktionsinformationen an einen Analyseserver, wobei der Analyseserver die Benutzerinteraktionsinformationen mit Referenzergebnissen aus einem Satz verschiedener Kontrollgruppen vergleicht: Mustereigenschaften für menschliche Benutzer, wodurch ein Bericht über automatisierte Browseragenten-Aktivität basierend auf einer qualitativen Bewertung der gesammelten Leistungsmetriken erstellt wird, und
Ziehen einer Schlussfolgerung (105) bezüglich einer Wahrscheinlichkeit, dass der Benutzer ein automatisierter Browseragent ist, wobei die Wahrscheinlichkeit darauf basiert, welches der Referenzergebnisse die höchste Übereinstimmung mit den Daten aufweist; wobei das Verfahren **dadurch gekennzeichnet ist, dass**
der Satz verschiedener Kontrollgruppen auch Mustereigenschaften für automatisierte Browseragenten und Mustereigenschaften umfasst, bei denen unklar ist, ob sie von einem Menschen oder einem automatisierten Browseragenten ausgeführt wurden, und
die Benutzerinteraktionsinformationen Elemente umfassen, die überwacht und ausgewertet werden und in zwei Klassen unterteilt werden:
Inhalte, die beim Senden der Seite an den Browser des Benutzers beim Laden der Seite vorhanden sind, und über einen Zeitraum erzeugte Inhalte, die aufgrund der Interaktion mit einem menschlichen Benutzer variieren;
wobei die Benutzerinteraktionsinformationen in den Inhalten, die vorhanden sind, das Aufnehmen von Diskrepanzen durch aktives Sondieren umfassen, wobei das Aufnehmen umfasst:
HTML5-Standardkonformität und Muster der Fehlerbehandlung, und
wobei Benutzerinteraktionsinformationen mit Bezug auf Inhalte, die über einen Zeitraum erzeugt wurden, sich auf Situationen und Informationen beziehen, die umfassen:
Unterdrückung von Fehlermeldungen, Grafikhardware, die bemerkt, dass keine Pixel eine Aktualisierung erfordern, Tastaturaktivität und Beschleunigungssensordaten.

2. Verfahren nach Anspruch 1, wobei das Mittel zum Erfassen einen Codeausschnitt umfasst und die Benutzerinteraktionsinformationen HTML5-Standardkonformität umfassen.

3. Verfahren nach Anspruch 2, ferner umfassend: Registrieren eines Handlers und eines Listeners für ein bestimmtes Browserereignis, wobei der Handler Benutzerinteraktionsinformationen empfängt, die dem Browserereignis zugeordnet ist, und der Listener die Wiederherstellung von ansonsten nicht identifizierbaren Daten ermöglicht.

4. Verfahren nach Anspruch 2, wobei die Erfassung, der Vergleich und die Berichterstellung von Daten über die Stapelverarbeitung implementiert sind oder wobei die Erfassung, der Vergleich und die Berichterstellung von Daten über die Datenstromverarbeitung implementiert werden.

5. Verfahren nach Anspruch 2, ferner umfassend die Integration mit einem Pre-CAPTCHA-Anmeldungs-Auditor.

6. Verfahren nach Anspruch 2, wobei die Benutzerinteraktionsinformationen ferner Kommunikationskanäle umfassen, die nicht mit der Satzeigenschaft für den typischen durch menschliche Bediener betriebenen Computer übereinstimmen.

7. Verfahren nach Anspruch 2, wobei die Benutzerinteraktionsinformationen ferner eine Flash-Aktualisierungsrate umfassen.

8. Verfahren nach Anspruch 2, wobei die Benutzerinteraktionsinformationen ferner eine Synchronisation von Flash-Stufen umfassen.

9. Computersystem für die Erfassung automatisierter Browseragenten, umfassend: eine erste Stufe der Identifizierung, die das Gruppieren der Browsing-Aktivität basierend auf dem Ursprung umfasst, eine zweite Stufe der Datensammlung, die das Senden einer Seite, die einen bereits eingefügten Codeausschnitt zum Aufzeichnen von bestimmten Benutzerinteraktionsinformationen beim Laden der Seite und nach dem Laden der Seite enthält, und das Übertragen der Benutzerinteraktionsinformationen an einen Analyseserver umfasst, eine dritte Stufe der Bewertung innerhalb des Analyseservers, die das Vergleichen der Benutzerinteraktionsinformationen mit Kontrollgruppen umfasst, die Mustereigenschaften für menschliche Benutzer, Mustereigenschaften für automatisierte Browseragenten und Mustereigenschaften umfassen, bei denen unklar ist, ob sie von einem Menschen oder einem automatisierten Browseragenten ausgeführt wurden, und eine vierte Stufe der Berichterstellung, die das Kompilieren eines prädiktiven Berichts über automatisierte Browseragenten-Aktivität basierend auf einer qualitativen Bewertung von gesammelten Leistungsmetriken umfasst, wobei der prädiktive Bericht die Datenbank mit der höchsten Übereinstimmung der drei Datenbanken offenlegt,
wobei die Benutzerinteraktionsinformationen umfassen: eine Interaktion mit unsichtbaren Elementen einer Seite, fehlende Merkmale einer Interaktion, atypisches Schnittstellenverhalten, eine falsche Seitenelementeigenschaft, nicht übereinstimmende Kommunikationskanäle, eine Flash-Aktualisierungsrate, Synchronisation von Flash-Stufen, eine grafische Aktualisierungsrate, Fehlerbehandlungsinformationenen, HTML5-Standardkonformität, für automatisierte Browseragenten spezifische injizierte Konfigurationen, Tastaturaktivität, Beschleunigungssensordaten, Bildlaufereignisse und durchschnittliche Lese- und Besuchszeit.

## Revendications

1. Procédé de détection d'agents navigateurs automatisés, comprenant :
l'insertion (100, 200) d'un moyen de détection d'informations dans un code de page avant qu'une page soit envoyée à un navigateur d'utilisateur,
l'envoi (101, 102) de ladite page à un navigateur d'utilisateur, dans lequel ledit moyen envoie des émissions à partir d'un ou de plusieurs branchements via un ou plusieurs canaux, lesdites émissions capturant des informations d'interaction utilisateur sans requérir une interaction navigateur et entraînant une collecte de données immédiate et poursuivie desdites informations d'interaction utilisateur, et
la transmission (104) via des publications HTTP asynchrones desdites informations d'interaction utilisateur à un serveur d'analyse, dans lequel ledit serveur d'analyse compare lesdites informations d'interaction utilisateur avec des résultats de référence issus d'un jeu de groupes témoins différents : des caractéristiques de modèle pour des humains, faisant ainsi un rapport sur une activité d'agent navigateur automatisé sur la base d'une évaluation qualitative de métriques de performance collectées, et
la réalisation d'une conclusion (105) sur une probabilité que l'utilisateur soit un agent navigateur automatisé, ladite probabilité étant basée sur celui desdits résultats de référence qui a la plus forte correspondance avec lesdites données ; le procédé étant **caractérisé en ce**
**que** le jeu de groupes témoins différents comprend également des caractéristiques de modèle pour des agents navigateurs automatisés, et des caractéristiques de modèle dont on ne sait pas clairement si elles sont effectuées par un humain ou un agent navigateur automatisé, et
**que** les informations d'interaction utilisateur comprennent des éléments qui sont surveillés et évalués, entrant dans deux classes :
• un contenu qui existe tout en envoyant la page au navigateur d'utilisateur au chargement de la page, et
• un contenu qui est généré au cours du temps qui varie en raison d'une interaction avec un utilisateur humain ;
dans lequel des informations d'interaction utilisateur dans le contenu qui existe comprennent une capture de désaccords par sondage actif, la capture comprenant :
un respect de normes HTML5, et des modèles en contrôle d'exactitude, et
dans lequel des informations d'interaction utilisateur relatives à un contenu qui sont générées au cours du temps concernent des situations et des informations comprenant :
la suppression de messages d'erreur, un matériel graphique constatant qu'aucun pixel ne requiert une mise à jour, une activité de clavier, et des données d'accéléromètre.

2. Procédé selon la revendication 1, dans lequel lesdits moyens de détection comprennent un bout de code et lesdites informations d'interaction utilisateur comprennent un respect de normes HTML5.

3. Procédé selon la revendication 2, comprenant en outre : l'enregistrement d'un manipulant et d'un écoutant d'un évènement de navigateur donné, dans lequel ledit manipulant reçoit des informations d'interaction utilisateur associées audit évènement de navigateur et ledit écoutant permet la récupération de données autrement non identifiables.

4. Procédé selon la revendication 2, dans lequel lesdites collecte de données, comparaison, et rapport sont implémentés via un traitement par lots, ou dans lequel lesdites collecte de données, comparaison, et rapport sont implémentés via un traitement de flux.

5. Procédé selon la revendication 2, comprenant en outre une intégration avec un auditeur d'inscription pré-CAPTCHA.

6. Procédé selon la revendication 2, dans lequel lesdites informations d'interaction utilisateur comprennent en outre des canaux de communication qui ne correspondent pas au jeu caractéristique de l'ordinateur exploité par humain habituel.

7. Procédé selon la revendication 2, dans lequel lesdites informations d'interaction utilisateur comprennent en outre un débit de mise à jour Flash.

8. Procédé selon la revendication 2, dans lequel lesdites informations d'interaction utilisateur comprennent en outre un synchronisme d'étages Flash.

9. Système d'ordinateur pour une détection d'agent navigateur automatisé, comprenant : un premier étage d'identification, comprenant le groupement d'une activité de navigation sur la base de l'origine, un deuxième étage de collecte de données, comprenant l'envoi d'une page contenant un bout de code préinséré pour enregistrer des informations d'interaction utilisateur particulières, au chargement de la page et après chargement de la page, et la transmission desdites informations d'interaction utilisateur à un serveur d'analyse, un troisième étage d'évaluation au sein dudit serveur d'analyse, comprenant la comparaison desdites informations d'interaction utilisateur à des groupes témoins comprenant des caractéristiques de modèle pour des humains, des caractéristiques de modèle pour des agents navigateurs automatisés, et des caractéristiques de modèle dont on ne sait pas clairement si elles sont effectuées par un humain ou un agent navigateur automatisé, et un quatrième étage de rapport, comprenant la compilation d'un rapport prédictif sur une activité d'agent navigateur automatisé sur la base d'une évaluation qualitative de métriques de performance collectées, ledit rapport prédictif divulguant la base de données ayant la plus forte correspondance parmi lesdites trois bases de données,
dans lequel lesdites informations d'interaction utilisateur comprennent : une interaction avec des éléments invisibles d'une page, des propriétés manquantes d'une interaction, un comportement d'interface atypique, une mauvaise propriété d'éléments de page, des canaux de communication ne correspondant pas, un débit de mise à jour Flash, un synchronisme d'étages Flash, un débit de mise à jour graphique, des informations de contrôle d'exactitude, un respect de normes HTML5, des configurations injectées spécifiques d'un agent navigateur automatisé, une activité de clavier, des données d'accéléromètre, des évènements de défilement, et un temps de lecture et de visite moyen.
